Europäisches Patentamt

European Patent Office

Office européen des brevets

(19)

(11) Numéro de publication: **0 192 502**
**B1**

(12) **FASCICULE DE BREVET EUROPEEN**

(45) Date de publication du fascicule du brevet:
**14.09.88**

(51) Int. Cl.⁴: **F 23 L 15/04**

(21) Numéro de dépôt: **86400070.8**

(22) Date de dépôt: **14.01.86**

(54) **Procédé de préchauffage d'un gaz comburant par des gaz de combustion et dispositif de préchauffage associé à un brûleur comportant application de ce procédé.**

(30) Priorité: **22.01.85 FR 8500861**

(43) Date de publication de la demande:
**27.08.86 Bulletin 86/35**

(45) Mention de la délivrance du brevet:
**14.09.88 Bulletin 88/37**

(84) Etats contractants désignés:
**AT BE CH DE GB IT LI LU NL SE**

(56) Documents cités:
**DE - A - 2 530 062**
**DE - B - 2 808 213**
**DE - B - 2 808 213**
**FR - A - 1 576 461**
**FR - A - 2 308 070**
**FR - A - 2 354 526**
**FR - A - 2 356 897**
**FR - A - 2 457 437**
**FR - A - 2 552 858**
**GB - A - 1 332 125**
**GB - A - 2 126 331**
**US - A - 3 163 202**
**US - A - 4 210 411**

(73) Titulaire: **GAZ DE FRANCE, 23, rue Philibert Delorme,
F-75017 Paris (FR)**

(72) Inventeur: **Louis, Raymond, 53 rue Maurice Berteaux,
F-95360 Montmagny (FR)**

(74) Mandataire: **Durand, Yves Armand Louis et al, Cabinet Z.
Weinstein 20, Avenue de Friedland, F-75008 Paris (FR)**

ACTORUM AG

# Description

La présente invention a essentiellement pour objet un procédé de préchauffage par des gaz de combustion d'un gaz comburant avant son mélange avec un gaz combustible dans un brûleur.

L'invention vise également un dispositif de préchauffage associé à un brûleur pour la mise en œuvre de ce procédé.

On a déjà proposé un certain nombre de solutions techniques pour récupérer la chaleur des produits de combustion issus par exemple d'une enceinte thermique, dans le but de réchauffer le gaz comburant avant son mélange avec le gaz combustible passant dans le brûleur associé à ladite enceinte thermique.

Un tel réchauffage du gaz comburant à l'aide des produits de combustion permet, comme on le comprend, une amélioration du rendement de l'opération.

Parmi les solutions proposées jusqu'à présent, on peut citer celle du document GB-A-2 126 331 qui décrit un dispositif de préchauffage associé à un brûleur comprenant un caisson contenant un premier échangeur gaz de combustion – gaz comburant et un deuxième échangeur gaz de combustion – gaz comburant incorporé audit brûleur, le premier échangeur étant disposé verticalement au dessus de l'ensemble brûleur – deuxième échangeur et comportant une sortie du gaz comburant préchauffé et une sortie des gaz de combustion raccordées à cet ensemble.

Toutefois, ce genre de brûleur présente un certain nombre d'inconvénients parmi lesquels il faut citer le défaut de compacité, une utilisation non complète des gaz de combustion dans l'échangeur incorporé au brûleur ce qui limite par conséquent les échanges thermiques gaz de combustion-gaz comburant et les domaines d'utilisation en température.

Aussi, la présente invention a pour but de remédier notamment aux inconvénients ci-dessus en proposant un nouveau procédé et dispositif de préchauffage du gaz comburant, ce procédé et ce dispositif améliorant considérablement les échanges thermiques gaz de combustion-gaz comburant, permettant la récupération de la quasi-totalité de l'énergie perdue dans les gaz de combustion, présentant une très grande fiabilité par le fait que les éléments soumis à haute température ne sont pas métalliques contrairement aux brûleurs antérieurs, et présentant une grande compacité en même temps qu'un coût peu élevé.

A cet effet, l'invention a pour objet un procédé de préchauffage par des gaz de combustion d'un gaz comburant avant son mélange avec un gaz combustible dans un brûleur, lequel gaz comburant est tout d'abord préchauffé en amont de brûleur par les gaz de combustion et est ensuite réchauffé dans ledit brûleur par échange thermique à co-courant puis à contre courant avec les gaz de combustion pour être finalement mélangé avec le gaz combustible, caractérisé en ce que ledit gaz comburant est préchauffé en amont du brûleur par échange thermique à contre-courant avec lui-même puis à co-courant avec les gaz de combustion, ce après quoi le gaz comburant de même que les gaz de combustion sont injectés tangentiellement dans le brûleur pour y provoquer une rotation desdits gaz avant l'échange thermique précité dans le brûleur.

Une telle rotation favorisera avantageusement les échanges thermiques gaz de combustion-gaz comburant au niveau du brûleur.

L'invention vise également un dispositif de préchauffage associé à un brûleur pour la mise en œuvre du procédé ci-dessus, du type comprenant un caisson contenant un premier échangeur gaz de combustion-gaz comburant et un deuxième échangeur gaz de combustion-gaz comburant incorporé audit brûleur, le premier échangeur étant disposé verticalement au-dessus de l'ensemble brûleur – deuxième échangeur et comportant une sortie du gaz comburant préchauffé et une sortie des gaz de combustion raccordées à cet ensemble, caractérisé en ce que la sortie du gaz comburant est constituée par un conduit raccordé tangentiellement à un tube extérieur du deuxième échangeur et communiquant avec un espace annulaire externe de cet échangeur défini par ledit tube extérieur et un tube intermédiaire intérieurement concentrique à ce dernier, tandis que la sortie des gaz de combustion, est constituée par un conduit raccordé tangentiellement au tube intermédiaire et communiquant avec un espace annulaire intermédiaire du deuxième échangeur défini par le tube intermédiaire et un tube interne qui est intérieurement concentrique au tube intermédiaire et qui définit, avec la conduite d'alimentation en gaz combustible intérieurement concentrique au tube interne, un espace annulaire interne communiquant avec l'espace annulaire externe.

Ainsi, la combinaison des trois tubes coaxiaux du deuxième échangeur inférieur incorporé au brûleur, permettra des échanges par convection particulièrement élevés conduisant à un réchauffage remarquablement efficace du gaz comburant et par conséquent à un rendement de chauffe par combustion du gaz combustible qui sera excellent.

Suivant une autre caractéristique de ce dispositif, la conduite d'alimentation en gaz combustible comporte une extrémité conique avec des orifices communiquant avec l'espace annulaire interne du deuxième échangeur et débouche dans une enceinte thermique comportant en partie haute une ouverture permettant le passage des gaz de combustion vers le premier échangeur gaz de combustion-gaz comburant.

On précisera encore ici que le caisson précité est avantageusement réalisé en maçonnerie à base de matériaux réfractaires, de sorte que les gaz de combustion à haute température ne seront pas en contact avec des parties métalliques qui risqueraient d'être détériorées sous l'effet de températures trop élevées.

Mais d'autres caractéristiques et avantages de l'invention apparaîtront mieux dans la description détaillée qui suit et se réfère aux dessins annexés, donnés uniquement à titre d'exemple, et dans lesquels:

La fig. 1 est une vue schématique en coupe verticale d'un dispositif selon l'invention associé à une enceinte thermique représentée partiellement;

la fig. 2 est une vue en coupe suivant la ligne II–II de la fig. 1, et

la fig. 3 est une vue très schématique et en perspective d'une enceinte thermique équipée d'une batterie de dispositifs conformes au principe de l'invention.

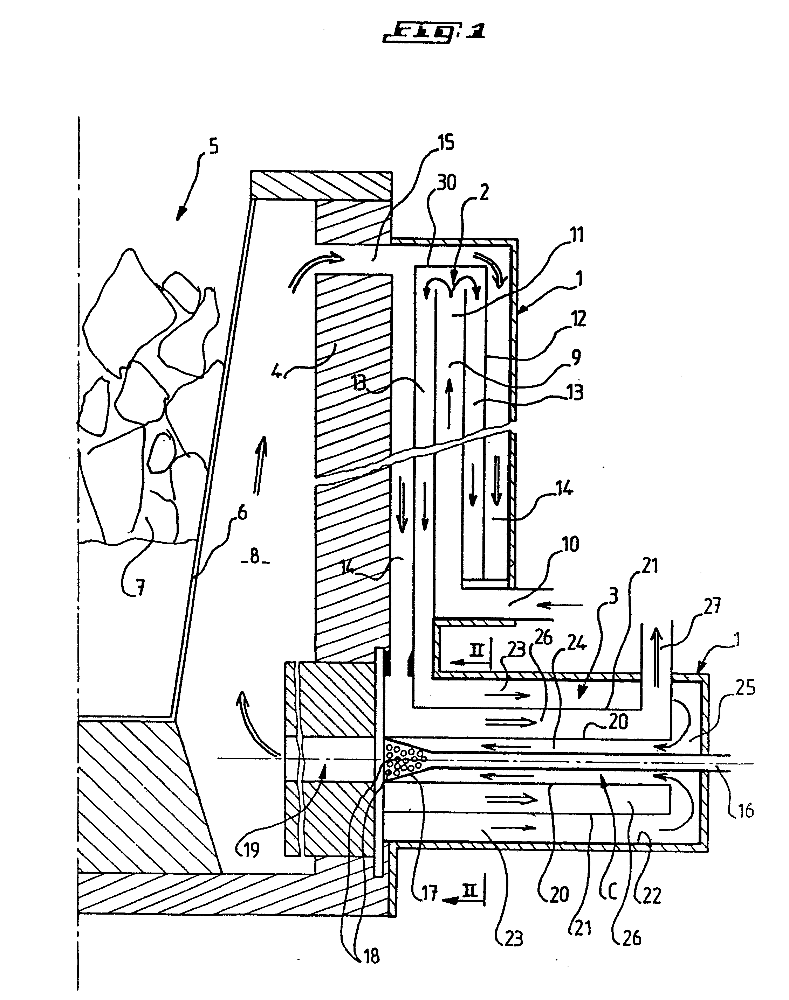

Suivant un exemple de réalisation, et en se reportant à la fig. 1, on voit qu'un dispositif selon l'invention comprend essentiellement un caisson 1 contenant un premier échangeur indépendant 2 et un deuxième échangeur 3 associé à un brûleur, le premier échangeur 2 présentant la forme générale d'un doigt de gant et étant agencé verticalement au-dessus de l'ensemble brûleur-deuxième échangeur 3.

L'échangeur 2 est disposé verticalement le long de la paroi 4 d'un four 5 qui, suivant l'exemple de réalisation représenté, est un four de fusion à creuset 6 susceptible de recevoir une charge 7 chauffée par les gaz de combustion circulant dans l'enceinte thermique 8 formée entre le creuset 6 et la paroi 4 du four qui est, comme connu en soi, réalisée en un matériau réfractaire.

Cet échangeur primaire ou supérieur 2 comprend un conduit vertical central ou axial 9 alimenté en gaz comburant, tel que par exemple de l'air, qui est introduit à l'entrée 10 de ce conduit à la partie inférieure de l'échangeur 2. Le conduit 9 débouche par sa partie supérieure 11 dans une première enveloppe 12 qui coiffe et entoure coaxialement le conduit 9 pour définir entre elle et ce conduit en espace ou une voie 13 de circulation du gaz comburant. Une deuxième enveloppe entoure coaxialement la première enveloppe 12 pour définir avec elle un espace 14 de circulation des gaz de combustion.

Suivant un exemple préféré de réalisation, la deuxième enveloppe en question est constituée par la caisson 1 lui-même et par la paroi 4 du four 5 qui ferme en quelque sorte le caisson 1. L'espace 14 est en communication avec l'enceinte thermique 8 grâce à au moins une ouverture 15 ménagée au travers de la paroi 4 dans sa partie haute, comme on le voit bien sur la fig. 1.

On remarquera ici que l'échangeur 2 en forme de doigt de gant offre une surface d'échange assez grande pour un faible encombrement, ses dimensions étant fonction de la hauteur du four 5. Par ailleurs, ce système offre la possibilité de choisir le point de prélèvement des gaz de combustion, ce qui permet d'améliorer les échanges par convection puisque l'on évitera avantageusement le détournement d'une partie des gaz de combustion, ce qui était le cas dans les brûleurs auto-récupérateurs connus.

Le deuxième échangeur 3 est associé à un brûleur alimenté en gaz combustible par une conduite 16 se terminant par une extrémité conique 17 comportant des orifices 18. Comme on le décrira plus loin, la partie conique perforée 17 permet le mélange du gaz combustible avec l'air comburant préchauffé tout en stabilisant la combustion dans la chambre de combustion du brûleur que l'on a repéré d'une manière générale en C. Comme cela est connu en soi, le brûleur est complété par un ouvreau 19 en béton réfractaire dans lequel se développe la combustion de façon intensive, la vitesse des gaz à la sortie de l'ouvreau étant voisine de 50 m/s.

L'échangeur 3 incorporé au brûleur comprend trois tubes ou enveloppes concentriques entourant coaxialement la conduite 16 d'alimentation en gaz combustible. Plus précisément, le repère 20 désigne le tube le plus intérieur, le repère 21 le tube intermédiaire, et le repère 22 le tube le plus extérieur qui, suivant l'exemple de réalisation représenté, est constitué par la paroi interne du caisson 1.

Le tube le plus extérieur 22 et le tube intermédiaire 21 définissent un espace externe 23, tandis que le tube le plus intérieur 20 et la conduite 16 définissent un espace annulaire interne 24. Les deux espaces externe 23 et interne 24 sont communicants, comme on le voit en 25, et constituent une voie de passage pour le gaz comburant réchauffé. Les tubes concentriques intermédiaires 21 et intérieur 20 définissent un espace intermédiaire 26 dans lequel circulent les gaz de combustion. On comprend donc que le circuit des gaz de combustion est en quelque sorte inséré entre deux circuits d'air comburant. On remarquera ici que l'espace annulaire 26 de circulation des gaz de combustion communique avec l'extérieur par une cheminée 27.

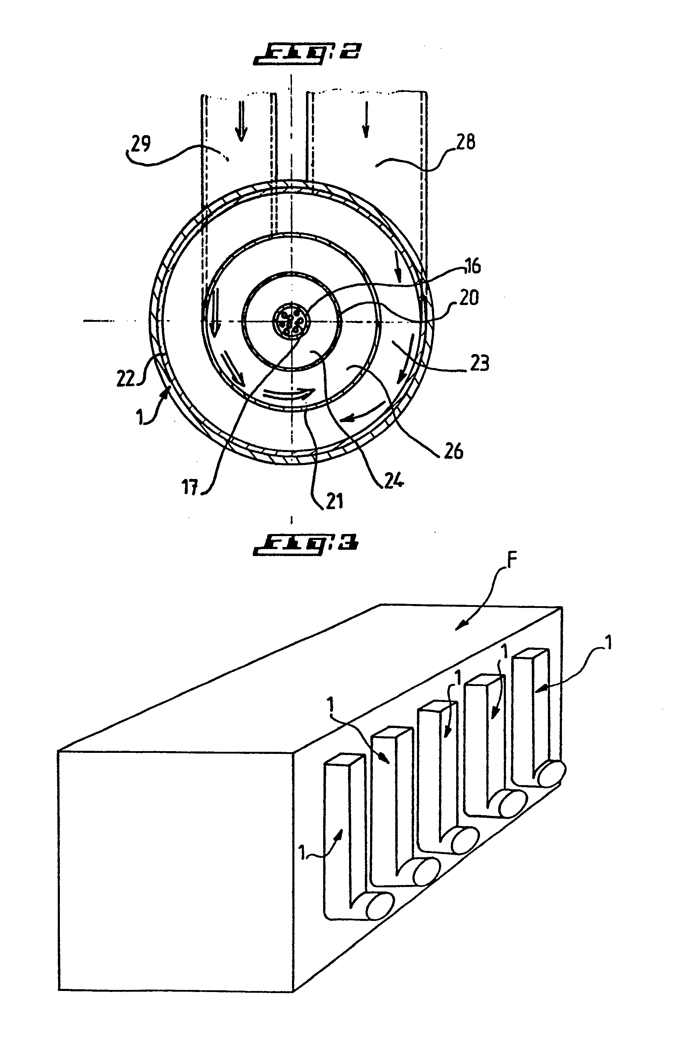

Comme cela apparaît clairement sur la fig. 2, l'espace 13 de circulation du gaz comburant dans le premier échangeur 2 communique avec l'espace externe 23 du deuxième échangeur 3 par un conduit 28 raccordé tangentiellement au tube concentrique le plus extérieur 22, c'est-à-dire au caisson 1 dans l'exemple représenté.

De même, l'espace 14 de circulation des gaz de combustion dans le premier échangeur 2 communique avec l'espace intermédiaire 26 dans le deuxième échangeur 3 par un autre conduit 29 raccordé tangentiellement lui aussi au tube concentrique intermédiaire 21.

Une telle liaison tangentielle des conduits 28 et 29 permet la circulation et la rotation du gaz comburant et des gaz de combustion dans l'échangeur 3, ce qui améliore considérablement les échanges thermiques.

Mais on expliquera maintenant en détail le fonctionnement du dispositif décrit ci-dessus en se reportant aux fig. 1 et 2 sur lesquelles on a matérialisé le trajet de l'air comburant par des flèches à trait unique, et le trajet des gaz de combustion par des flèches à double trait ce qui facilitera la compréhension.

L'air comburant admis en 10 s'écoule dans le conduit central 9 du premier échangeur 2 puis dans l'espace ou voie de passage 13 pour ainsi subir un échange thermique à contre-courant avec lui-même. On remarquera ici qu'une telle circulation du gaz comburant à contre-courant résulte du fait que l'enveloppe 12 comporte une extrémité supérieure 30 qui est fermée et qui coiffe en quelque sorte l'extrémité débouchante 11 du conduit 9.

La veine de gaz comburant passant dans l'espace 13 est réchauffée par échange thermique à courant parallèle avec les gaz de combustion sortant de l'enceinte thermique 8 par l'ouverture 15 et circulant dans l'espace 14.

L'air comburant parvient ensuite dans l'échangeur 3 où il subit un échange thermique à co-courant dans l'espace externe 23 puis à contre-courant dans l'espace interne 24 avec les gaz de combustion circulant dans la voie de passage intermédiaire 26, comme cela est clairement matérialisé par les flèches sur la fig. 1.

On précisera ici que grâce à l'injection tangentielle des gaz de combustion par le conduit 29, ces gaz seront plaqués contre la paroi ou tube intermédiaire 21 en contact avec l'air comburant véhiculé à co-courant dans l'espace externe 23, ce qui, comme on le comprend, améliore les échanges. De même, l'injection tangentielle par le conduit 28 du gaz comburant permettra à celui-ci d'être plaqué contre le tube concentrique 20 au retour du gaz comburant dans l'espace interne 24 où il est à contre-courant avec les gaz de combustion et à co-courant avec le gaz combustible dans la conduite 16. Dès lors, on comprend qu'au niveau de l'échangeur 3, l'échange thermique sera considérablement favorisé par le fait que les veines 23, 24 d'air comburant seront en contact intime avec les tubes ou parois 20, 21 entre lesquelles circulent les gaz de combustion.

Dès lors, on comprend que la chambre de combustion C du brûleur sera alimentée en air comburant efficacement réchauffé qui se mélangera au gaz combustible de façon à obtenir un rendement de chauffe élevé dans l'enceinte thermique 8.

Le brûleur est bien entendu muni, comme connu en soi, d'un allumage électrique ainsi que de moyens appropriés assurant la sécurité de flamme.

Le dispositif selon l'invention peut recevoir de nombreuses applications parmi lesquelles on peut citer des fours de forge, les fours de réchauffage des métaux, les fours de traitement thermique à feu nu, et les fours à creuset pour la fusion de métaux divers.

Comme on le voit sur la fig. 3, on peut facilement adapter sur un four F une batterie de dispositifs conformes aux principes de cette invention.

On a donc réalisé suivant l'invention un dispositif de préchauffage de gaz comburant associé à un brûleur, qui est simple, compact, peu coûteux à fabriquer, et qui est très fiable et efficace sur le plan des échanges thermiques et de la résistance aux températures élevées puisque toutes les parties soumises à haute température ne sont plus métalliques.

En outre, on ajoutera que l'organisation particulière de ce dispositif est telle qu'il présente des surfaces d'échange très importantes tout en restant très compact, et qu'il permet aussi de diminuer la longueur des tuyauteries d'alimentation.

## Revendications

1. Procédé de préchauffage par des gaz de combustion d'un gaz comburant avant son mélange avec un gaz combustible dans un brûleur, lequel gaz comburant est tout d'abord préchauffé en amont du brûleur par les gaz de combustion et est ensuite réchauffé dans ledit brûleur par échange thermique à co-courant puis à contre courant avec les gaz de combustion pour être finalement mélangé avec le gaz combustible, caractérisé en ce que ledit gaz comburant est préchauffé en amont du brûleur par échange thermique à contrecourant avec lui-même puis à co-courant avec les gaz de combustion, ce après quoi le gaz comburant de même que les gaz de combustion sont injectés tangentiellement dans le brûleur pour y provoquer une rotation desdits gaz avant l'échange thermique précité dans le brûleur.

2. Dispositif de préchauffage associé à un brûleur pour la mise en œuvre du procédé selon la revendication 1, du type comprenant un caisson (1) contenant un premier échangeur (2) gaz de combustion-gaz comburant et un deuxième échangeur (3) gaz de combustion-gaz comburant incorporé audit brûleur (C), le premier échangeur (2) étant disposé verticalement au dessus de l'ensemble brûleur (C)-deuxième échangeur (3) et comportant une sortie du gaz comburant préchauffé et une sortie des gaz de combustion raccordées à cet ensemble, caractérisé en ce que la sortie du gaz comburant est constituée par un conduit (28) raccordé tangentiellement à un tube extérieur (22) du deuxième échangeur (3) et communiquant avec un espace annulaire externe (23) de cet échangeur défini par ledit tube extérieur (22) et un tube intermédiaire (21) intérieurement concentrique à ce dernier, tandis que la sortie des gaz de combustion est constituée par un conduit (29) raccordé tangentiellement au tube intermédiaire (21) et communiquant avec un espace annulaire intermédiaire (26) du deuxième échangeur (3) défini par le tube intermédiaire (21) et un tube interne (20) qui est intérieurement concentrique au tube intermédiaire (21) et qui définit, avec la conduite (16) d'alimentation en gaz combustible intérieurement concentrique au tube interne (20), un espace annulaire interne (24) communiquant avec l'espace annulaire externe (23).

3. Dispositif selon la revendication 2, caractérisé en ce que la conduite (16) d'alimentation en gaz combustible comporte une extrémité conique (17) avec des orifices communiquant avec l'espace annulaire interne (24) du deuxième échangeur (3) et débouche dans une enceinte thermique (8) comportant en partie haute une ouverture (15) permettant le passage des gaz de combustion vers le premier échangeur (2) gaz de combustion-gaz comburant.

4. Dispositif selon la revendication 2, caractérisé en ce que le caisson précité (1) est réalisé en maçonnerie à base de matériaux réfractaires.

## Patentansprüche

1. Verfahren zur Vorwärmung eines die Verbrennung bewirkenden Gases durch Verbrennungsgase, bevor das die Verbrennung bewirkende Gas mit einem Brenngas in einem Brenner gemischt wird, wobei das besagte, die Verbrennung bewirkende Gas zuerst durch die Verbrennungsgase vor dem Brenner vorgewärmt wird und danach im besagten Brenner durch Wärmeaustausch im Gleichstrom mit und dann im Gegenstrom zu den Verbrennungsgasen erwärmt wird und endlich mit dem Brenngas gemischt wird, dadurch gekennzeichnet, dass das besagte, die Verbrennung bewirkende Gas vor dem Brenner durch Wärmeaustausch im Gegenstrom zu sich selbst und dann im Gleichstrom mit den Verbrennungsgasen vorgewärmt wird, wonach das die Verbrennung bewirkende Gas und die Verbrennungsgase tangential in den Brenner eingespeist werden, um dort eine Rotation der besagten Gase vor dem besagten Wärmeaustausch im Brenner zu verursachen.

2. Vorwärmeeinrichtung, die an einen Brenner angeschlossen ist, zur Durchführung des Verfahrens nach Anspruch 1, der Gattung, die einen, einen ersten Verbrennungsgase – die Verbrennung bewirkendes Gas – Austauscher (2) und einen zweiten, in dem Brenner (C) eingebauten Brenngase – die Verbrennung bewirkendes Gas – Austauscher (3) aufweist, wobei der erste Austauscher (2) senkrecht oberhalb der vom Brenner (C) und vom zweiten Austauscher (3) gebildeten Einheit angeordnet ist und einen Auslass für das vorerwärmte, die Verbrennung bewirkende Gas und einen Auslass für die Verbrennungsgase, die an diese Einheit angeschlossen sind, aufweist, dadurch gekennzeichnet, dass der Auslass für das die Verbrennung bewirkende Gas aus einer Leitung (28) besteht, die tangential an ein äusseres Rohr (22) des zweiten Austauschers (3) angeschlossen ist und die mit einem äusseren ringförmigen Raum (23) dieses Austauschers in Verbindung steht, welcher Raum durch das besagte äussere Rohr (22) und durch ein mit diesem innerkonzentrisches Zwischenrohr (21) bestimmt ist, während der Auslass für die Verbrennungsgase aus einer Leitung (29), die an das Zwischenrohr (21) tangential angeschlossen ist und die mit einem ringförmigen Zwischenraum (26) des zweiten Austauschers (3) in Verbindung steht, welcher Raum durch das Zwischenrohr (21) und durch ein inneres Rohr (20) bestimmt ist, wobei das innere Rohr mit dem Zwischenrohr (21) innerkonzentrisch ist und mit der, mit dem inneren Rohr (20) innerkonzentrischen Brenngaszufuhrleitung (16) einen, mit dem äusseren ringförmigen Raum (23) in Verbindung stehenden inneren ringförmigen Raum (24) bestimmt.

3. Einrichtung nach Anspruch 2, dadurch gekennzeichnet, dass die Brenngaszufuhrleitung (16) ein konisches Ende (17) aufweist mit, mit dem inneren ringförmigen Raum (24) des zweiten Austauschers (3) in Verbindung stehenden Öffnungen und dass die Leitung (16) in einen thermischen Raum (8) einmündet, der im oberen Bereich eine Öffnung (15) aufweist, die die Strömung der Verbrennungsgase zum ersten Verbrennungsgase – die Verbrennung bewirkendes Gas – Austauscher (2) ermöglicht.

4. Einrichtung nach Anspruch 2, dadurch gekennzeichnet, dass der besagte Caisson (1) aus einem Mauerwerk aus feuerfestem Material hergestellt ist.

## Claims

1. Method for preheating an oxidizing gas with combustion gases before it is mixed with a fuel gas in a burner, which oxidizing gas is first preheated upstream of the burner with combustion gases and is then reheated in the said burner by co-current heat exchange and then by counter-current heat exchange with the combustion gases and is finally mixed with the fuel gas, characterized in that the said oxidizing gas is preheated upstream of the burner by counter-current heat exchange with itself and then by co-current heat exchange with the combustion gases, whereafter the oxidizing gas as well as the combustion gases are injected tangentially into the burner to provoke there a rotation of the said gases before the aforesaid heat exchange in the burner.

2. Preheating device combined with a burner for carrying out the method according to claim 1, of the type comprising a vessel (1) containing a first combustion gas-oxidizing gas exchanger (2) and a second combustion gas-oxidizing gas exchanger (3) incorporated to the said burner (C), the first exchanger (2) being arranged vertically above the burner (C)-second exchanger (3) assembly and comprising a preheated oxidizing gas outlet and a combustion gas outlet both connected to this assembly, characterized in that the oxidizing gas outlet is formed of a conduit (28) connected tangentially to an outer tube (22) of the second exchanger (3) and communicating with an outer annular space (23) of this exchanger defined by the said outer tube (22) and an intermediate tube (21) inwardly concentric with the latter, whereas the combustion gas outlet is formed of a conduit (29) connected tangentially to the intermediate tube (21) and communicating with an intermediate annular space (26) of the second exchanger (3) defined by the intermediate tube (21) and an inner tube (20) which is inwardly concentric with the intermediate tube (21) and which defines, with the fuel gas feed conduit (16) which is inwardly concentric with the inner tube (20), an inner annular space (24) communicating with the outer annular space (23).

**0192502**

3. Device according to claim 2, characterized in that the fuel gas feed conduit (16) comprises one conical end (17) with openings communicating with the inner annular space (24) of the second exchanger (3) and arrives in a thermal room (8) comprising at the upper part an opening (15) permitting the combustion gases to flow towards the first combustion gas-oxidizing gas exchanger (2).

4. Device according to claim 2, characterized in that the aforesaid vessel (1) is made of a refractory material-based masonry.

FIG. 1

0192502

Fig.2

29    28

16

20

22    23
1

26
17    24
21

Fig.3

F

1    1

1

1

9